# EUROPÄISCHE PATENTSCHRIFT

(11) **EP 3 350 783 B1**
(45) Veröffentlichungstag und Bekanntmachung des Hinweises auf die Patenterteilung: **30.03.2022**
(21) Anmeldenummer: 16769864.6
(22) Anmeldetag: 15.09.2016
(51) Int. Cl.: G07D 11/50

(54) **VORRICHTUNG UND VERFAHREN ZUM ZÄHLEN VON WERTDOKUMENTBÜNDELN**
DEVICE AND METHOD FOR COUNTING BUNDLES OF VALUEABLE DOCUMENTS
DISPOSITIF ET PROCÉDÉ POUR COMPTER DES LIASSES DE DOCUMENTS DE VALEUR

(30) Priorität: 16.09.2015 DE 102015012148
(43) Veröffentlichungstag der Anmeldung: 25.07.2018
(73) Patentinhaber: Giesecke+Devrient Currency Technology GmbH, 81677 München (DE)
(72) Erfinder: STAPFER, Michael, 85579 Neubiberg (DE)
(74) Vertreter: Giesecke + Devrient IP
(86) Internationale Anmeldenummer: PCT/EP2016/001546
(87) Internationale Veröffentlichungsnummer: WO 2017/045757

(56) Entgegenhaltungen:
- JP-A- 2000 057 401
- JP-A- 2005 092 801
- US-A1- 2014 147 029

## Beschreibung

Die Erfindung betrifft eine Vorrichtung und ein Verfahren zum Zählen von Wertdokumentbündeln, insbesondere Banknotenbündeln, nach dem Oberbegriff der unabhängigen Ansprüche.

Zum Transport von Banknoten innerhalb und außerhalb von sog. Cash Centern oder Banken werden die Banknoten in Banknotenbündeln, auch Banknotenpäckchen genannt, zusammengefasst, und in geeignete Transportbehälter gegeben. Aus Sicherheitsgründen wird der Inhalt der Transportbehälter, je nach Anwendungsfall, vor, während und/oder nach dem Transport auf Vollständigkeit geprüft. Dies geschieht in der Regel durch manuelles Zählen der im jeweiligen Transportbehälter befindlichen Banknotenbündel. Da sich, je nach Größe des Transportbehälters, typischerweise bis zu 200 Banknotenbündel in einem Behälter befinden können, ist ein manueller Zählvorgang oft relativ zeitaufwendig. Ferner können Fehler beim Zählen nicht ausgeschlossen werden. Nicht zuletzt fehlt bei einem manuellen Zählvorgang ein dokumentarischer Nachweis.

Aus der JP 2005 092801 A ist eine Vorrichtung bekannt, die ein aus mehreren Banknotenbündeln bestehendes Paket prüft, ob es in gewünschter Weise aus den einzelnen Banknotenbündeln zusammengesetzt ist.

Es ist Aufgabe der Erfindung, eine Vorrichtung sowie ein Verfahren anzugeben, welche bzw. welches ein schnelleres und möglichst sicheres Zählen von Wertdokumentbündeln ermöglicht.

Diese Aufgabe wird durch eine Vorrichtung und ein Verfahren gemäß den unabhängigen Ansprüchen gelöst.

Die erfindungsgemäße Vorrichtung zum Zählen von Wertdokumentbündeln, welche jeweils mehrere durch ein Bündelungselement zu einem Bündel zusammengefasste Wertdokumente, insbesondere Banknoten, enthalten, weist auf: eine Bilderfassungseinrichtung, welche dazu ausgebildet ist, mindestens ein Bild der Wertdokumentbündel einschließlich Bündelungselementen zu erfassen, mindestens eine Beleuchtungseinrichtung, welche zur Beleuchtung der Wertdokumentbündel einschließlich Bündelungselementen mit ultravioletter Strahlung ausgebildet ist und eine Auswertungseinrichtung, welche dazu ausgebildet ist, im erfassten Bild anhand eines Fluoreszenzverhaltens die Bündelungselemente zu identifizieren und deren Anzahl zu ermitteln.

Das erfindungsgemäße Verfahren zum Zählen von Wertdokumentbündeln, welche jeweils mehrere durch ein Bündelungselement zu einem Bündel zusammengefasste Wertdokumente, insbesondere Banknoten, enthalten, mittels einer erfindungsgemäßen Vorrichtung weist folgende Schritte auf: Beleuchten der Wertdokumentbündel einschließlich Bündelungselementen mit ultravioletter Strahlung, erfassen mindestens eines Bildes der Wertdokumentbündel einschließlich Bündelungselementen, Identifizieren der Bündelungselemente im erfassten Bild anhand eines Fluoreszenzverhaltens der Bündelungselemente und Ermitteln der Anzahl der Bündelungselemente anhand der im Bild identifizierten Bündelungselemente.

Die Erfindung basiert auf dem Ansatz, ein oder mehrere Bilder der zu zählenden Banknotenbündel einschließlich der jeweiligen Bündelungselemente, wie etwa Banderolen, aufzunehmen und die in den aufgenommenen Bildern wiedergegebenen Bündelungselemente zu erkennen und zu zählen. Die Erkennung bzw. Identifizierung der Bündelungselemente erfolgt vorzugsweise mit Methoden der Bildverarbeitung, wie z.B. der Bilderkennung. Die in den aufgenommenen Bildern wiedergegebenen Bündelungselemente unterscheiden sich in der Regel deutlich von den Banknotenbündeln selbst und können daher mit hoher Zuverlässigkeit und Geschwindigkeit automatisch identifiziert und gezählt werden. Die auf diese Weise ermittelte Anzahl von Bündelungselementen entspricht dann der Anzahl der Banknotenbündel.

Insgesamt ermöglicht die Erfindung somit ein schnelles und sicheres Zählen von Wertdokumentbündeln, insbesondere von Banknotenbündeln.

Dazu ist die Auswertungseinrichtung ausgebildet, die Bündelungselemente anhand eines Fluoreszenzverhaltens der Bündelungselemente zu identifizieren. Dies ist von besonderem Vorteil, wenn die Bündelungselemente fluoreszierende Substanzen enthalten, die bei Bestrahlung mit Licht eines bestimmten Wellenlängenbereichs Fluoreszenz zeigen. Bei den fluoreszierenden Substanzen kann es sich beispielsweise um sog. optische Aufheller handeln, wie z.B. Titandioxid oder Calciumcarbonat, die häufig als sog. Weißmacher in Papier, nicht aber in Banknoten enthalten sind. Die Bündelungselemente erscheinen bei Bestrahlung mit ultravioletter (UV) Strahlung oder mit sichtbarem Licht mit einem relativ hohen UV-Anteil dann im erfassten Bild wesentlich heller als die übrigen Bildbereiche, in denen die nicht fluoreszierenden Teile der Banknotenbündel wiedergegeben sind, und können von diesen zuverlässig unterschieden und identifiziert werden. Die Zählung der Banknotenbündel wird dadurch noch zuverlässiger.

Die Vorrichtung weist eine Beleuchtungseinrichtung auf, welche zur Beleuchtung der Wertdokumentbündel einschließlich Bündelungselementen mit ultravioletter Strahlung ausgebildet ist. Durch die Beleuchtung der Banknotenbündel werden definierte Beleuchtungsbedingungen gewährleistet, so dass eine schnelle und zuverlässige Identifikation und Zählung der Banknotenbündel unabhängig von den jeweiligen Lichtbedingungen der Umgebung erfolgen kann. Durch eine Beleuchtung der Bündel mit ultraviolettem Licht lassen sich fluoreszierende Objekte, insbesondere fluoreszierende Bündelungselemente, im aufgenommenen Bild besonders gut von den übrigen Objekten bzw. Objektbestandteilen unterscheiden. Darüber hinaus ist es aber auch möglich, durch Bestrahlung der Banknotenbündel mit ultravioletter Strahlung Sicherheitselemente auf dem Bündelungselement sichtbar zu machen und im Bild zu erfassen.

Es ist ferner bevorzugt, dass die Auswertungseinrichtung dazu ausgebildet ist, Bündelungselemente in Form von Papierstreifen, insbesondere Banderolen, durch welche die Wertdokumente des jeweiligen Wertdokumentbündels zusammengehalten werden, zu identifizieren. Durch die im Paper in der Regel enthaltenen optischen Aufheller können die Bündelungselemente, wie vorstehend bereits erläutert, mit besonders hoher Zuverlässigkeit erkannt und gezählt werden.

Bei einer weiteren bevorzugten Ausführung ist eine Ausgabeeinrichtung zur Ausgabe von Informationen vorgesehen und die Auswertungseinrichtung ist dazu ausgebildet, die ermittelte Anzahl der Bündelungselemente bzw. der Banknotenbündel mit einer vorgegebenen Anzahl zu vergleichen und die Ausgabeeinrichtung zur Ausgabe einer Information in Abhängigkeit vom Ergebnis des Vergleichs anzusteuern. Bei der vorgegebenen Anzahl kann es sich z.B. um die ursprüngliche Anzahl der in einem Cash Center oder einer Bank kommissionierten und in einen Transportbehälter gegebenen Banknotenbündel handeln. Ergibt der Vergleich, dass die ermittelte Anzahl identisch ist mit der vorgegebenen Anzahl, so wird an der Ausgabeeinrichtung eine entsprechende optische und/oder akustische Nachricht ausgegeben, wie z.B. "OK" oder "Anzahl der Banknotenpäckchen korrekt". Andernfalls wird eine entsprechende anderslautende Nachricht ausgegeben, wie z.B. "STOP", "Anzahl der Banknotenpäckchen nicht korrekt" oder "Zählvorgang wiederholen".

Vorzugsweise ist eine Speichereinrichtung vorgesehen, welche dazu ausgebildet ist, das von den Wertdokumentbündeln einschließlich Bündelungselementen erfasste Bild, insbesondere zum Zwecke der Archivierung, zu speichern. Vorzugsweise erfolgt die Speicherung der Bilddaten zusammen mit Daten zur Identifikation der jeweils gezählten Banknotenbündel, beispielsweise Daten zur Identifikation eines Transportbehälters, in welchem sich die zu zählenden Banknotenbündel befinden. Hierdurch kann im Bedarfsfall, z.B. bei einer Beanstandung durch einen Kunden, anhand des jeweils aufgenommenen Bildes nachträglich geprüft bzw. bestätigt werden, wie viele Banknoten im jeweiligen Transportbehälter enthalten waren.

Bei einer weiteren bevorzugten Ausgestaltung weist die Vorrichtung ein Gehäuse auf, in dessen Innerem die Bilderfassungseinrichtung und/oder die Beleuchtungseinrichtung angeordnet ist bzw. sind, wobei das Gehäuse mindestens eine Öffnung aufweist, durch die ein Wertdokumentbehälter, in welchem sich die zu zählenden Wertdokumentbündel befinden, in das Innere des Gehäuses gebracht werden kann. Das Gehäuse ist derart ausgestaltet, dass die zu zählenden Banknotenbündel vom Umgebungslicht weitgehend abgeschirmt werden, so dass die Bilderfassung bei definierten Lichtverhältnissen erfolgen kann, was die Zuverlässigkeit weiter erhöht.

Vorzugsweise ist die Größe und/oder Form des Gehäuses an die Größe bzw. Form unterschiedlicher Wertdokumentbehälter anpassbar. Dadurch können auch Banknotenbündel schnell und zuverlässig gezählt werden, die in unterschiedlich großen Transportbehältern angeliefert werden.

Alternativ kann vorgesehen sein, dass die Bilderfassungseinrichtung und/oder die Beleuchtungseinrichtung an einer Zimmerdecke, insbesondere über einem Arbeitstisch, angebracht ist bzw. sind. Die zu zählenden Banknotenbündel werden hierbei durch die Beleuchtungseinrichtung und/oder durch Umgebungslicht beleuchtet. Im Falle einer Beleuchtung durch das Umgebungslicht ist die Beleuchtungseinrichtung nicht zwingend erforderlich.

Bei einer weiteren bevorzugten Ausgestaltung weist die Vorrichtung eine Transporteinrichtung auf, welche dazu ausgebildet ist, die Bilderfassungseinrichtung und die Wertdokumentbündel, welche sich insbesondere in einem Wertdokumentbehälter befinden, während der Bilderfassung relativ zueinander zu bewegen. Dies ist insbesondere dann von Vorteil, wenn die Gesamtheit der, z.B. in einem Transportbehälter, bereitgestellten und zu zählenden Banknotenbündel eine Ausdehnung hat, die über das Sichtfeld der Bilderfassungseinrichtung hinausgeht. Anstelle von nur einem Bild werden mehrere Bilder der zu zählenden Banknotenbündel aufgenommen und die darin wiedergegebenen Bündelungselemente identifiziert und gezählt.

Vorzugsweise ist eine Kommunikationseinrichtung vorgesehen, welche dazu ausgebildet ist, die ermittelte Anzahl der Bündelungselemente in ein an einem Wertdokumentbehälter, in welchem sich die zu zählenden Wertdokumentbündel befinden, vorgesehenes Speicherelement zu schreiben. Beispielsweise kann die Öffnung an der Oberseite des Transportbehälters mit einer transparenten Abdeckung verschlossen, insbesondere versiegelt, sein, so dass einerseits die im Transportbehälter befindlichen Banknotenbündel von außen sichtbar sind und gezählt werden können, und andererseits ein Manipulationsversuch leicht anhand einer Beschädigung der Abdeckung erkannt werden kann. An der Abdeckung kann ein elektronisches Siegel z.B. in Form eines RFID-Transponders mit Speicherelement vorgesehen sein, in welches die Kommunikationseinrichtung mittels drahtloser Kommunikation die ermittelte Anzahl und ggf. weitere Daten, wie z.B. Institution, Ort und Datum der Zählung, schreiben kann.

Vorzugsweise werden die zu zählenden Banknotenbündel, beispielsweise in einem Transportbehälter, derart angeordnet, dass die Banknoten der einzelnen Banknotenbündel mit ihren Schnittkanten, insbesondere Längsschnittkanten, auf einer Grundfläche, z.B. einer Bodenfläche des Transportbehälters, aufliegen oder stehen und die gegenüberliegenden Schnittkanten bzw. Längsschnittkanten einschließlich Bündelungselement von oben, insbesondere von der Oberseite des Transportbehälters her, sichtbar sind. Hierdurch wird gewährleistet, dass die Bündelungselemente aller Banknotenbündel von der Bilderfassungseinrichtung zuverlässig erfasst werden können.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig.1: ein Beispiel eines Transportbehälters mit darin befindlichen Banknotenbündeln in Draufsicht;
- Fig. 2: ein erstes Beispiel eines Querschnitts einer Vorrichtung zum Zählen von Banknotenbündeln in Seitenansicht; und
- Fig. 3: ein zweites Beispiel eines Querschnitts einer Vorrichtung zum Zählen von Banknotenbündeln in schematisierter Seitenansicht.

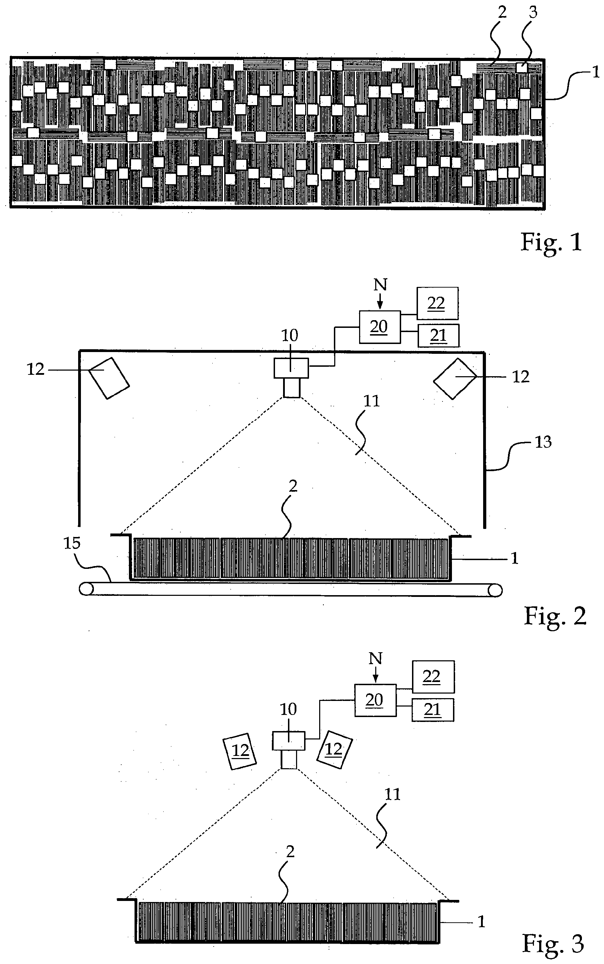

Figur 1 zeigt ein Beispiel eines Transportbehälters 1 in Draufsicht. Der Transportbehälter 1 weist im dargestellten Beispiel eine im Wesentlichen rechteckige Grundfläche auf, an deren Seiten im Wesentlichen vertikale Seitenwände vorgesehen sind. Die der Grundfläche gegenüberliegende obere Seite des Transportbehälters 1 kann offen gelassen werden oder aber auch mit einer, insbesondere transparenten, Abdeckung versehen sein.

Im vorliegenden Beispiel befindet sich im Transportbehälter 1 eine Vielzahl von Banknotenbündeln 2. Jedes der Banknotenbündel 2 weist eine Vielzahl einzelner Banknoten auf, welche mittels eines geeigneten Bündelungselements 3 zu einem Bündel zusammengefasst und/oder zusammengehalten werden. Typischerweise befinden sich in einem Banknotenbündel 2 jeweils nur Banknoten eines Nennwerts, wie z.B. 50 Euro- oder 100 Euro-Scheine.

Im vorliegenden Beispiel sind die jeweiligen Bündelungselemente 3 der Banknotenbündel 2 als sogenannte Banderolen ausgebildet. Bei einer Banderole handelt es sich vorzugsweise um einen Papierstreifen, auf dem optional Herkunfts- und/oder Bearbeitungsdaten aufgedruckt sein können.

Alternativ oder zusätzlich ist es aber auch möglich, andere Arten von Bündelungselementen 3 vorzusehen, wie beispielsweise eine transparente oder opake Folie, in welche jeweils ein Banknotenbündel 2 eingeschweißt oder eingepackt ist.

Im dargestellten Beispiel sind die einzelnen Banknotenbündel 3 im Transportbehälter 1 stehend gelagert, d.h. die Banknoten im jeweiligen Bündel 2 liegen mit ihren in Längsrichtung befindlichen Schnittkanten auf der Grundplatte des Transportbehälters 1 auf. Dadurch ist das jeweilige Bündelungselement 3 des Banknotenbündels 2 von der Oberseite des Transportbehälters 1 her sichtbar. Hierbei spielt es keine Rolle, ob die Banknotenbündel 2 im Wesentlichen senkrecht zur Längsrichtung des Transportbehälters 1 aneinandergereiht sind oder etwa parallel zur Längsrichtung des Transportbehälters 1, wie im dargestellten Beispiel exemplarisch anhand einiger Banknotenbündel 2 veranschaulicht, ausgerichtet sind. Im dargestellten Beispiel befinden sich die parallel zur Längsrichtung des Transportbehälters 1 ausgerichteten Banknotenbündel 2 zwischen zwei Reihen von senkrecht zur Längsrichtung ausgerichteten Banknotenbündeln 2 sowie zwischen einer solchen Reihe von Banknotenbündeln einerseits und einer Seitenwand des Transportbehälters 1 in Längsrichtung andererseits.

Figur 2 zeigt eine Querschnittsdarstellung eines ersten Beispiels einer Vorrichtung zum Zählen von Banknotenbündeln in Seitenansicht. Die Vorrichtung weist eine Bilderfassungseinrichtung 10 auf, z.B. eine Kamera, welche zur Erfassung ortsaufgelöster Bilder der in einem Transportbehälter 1 befindlichen Banknotenbündel 2 ausgebildet ist. Bei dem von den zu zählenden Banknotenbündeln 2 erfassten Bild kann es sich um ein einzelnes Bild oder eine Serie von Bildern, beispielsweise in Form einer Videoaufzeichnung, handeln. Im vorliegenden Beispiel ist das Sichtfeld der Bilderfassungseinrichtung 10 so groß, dass der Transportbehälter 1 einschließlich der darin befindlichen Banknotenbündel 2 innerhalb des Sichtfelds 11 liegt.

Ferner sind Beleuchtungseinrichtungen 12 vorgesehen, mittels welcher die zu zählenden Banknotenbündel 2 beleuchtet werden. Das von den Beleuchtungseinrichtungen 12 erzeugte Licht liegt hierbei vorzugsweise im sichtbaren und/oder infraroten und/oder ultravioletten Spektralbereich.

Um möglichst definierte Bedingungen bei der Bilderfassung zu gewährleisten, ist vorzugsweise ein Gehäuse 13 vorgesehen, das die Bilderfassungseinrichtung 10 und die Beleuchtungseinrichtungen 12 umgibt und in Form und/oder Größe so ausgestaltet ist, dass der in das Innere des Gehäuses eingeführte bzw. im Bereich einer unteren Öffnung des Gehäuses 13 befindliche Transportbehälter 1 und die darin befindlichen Banknotenbündel 2 gegen eine Beleuchtung durch Umgebungslicht abgeschirmt sind.

Ferner kann eine Transporteinrichtung 15, beispielsweise ein Förderband, vorgesehen sein, durch welches die zu zählenden Banknotenbündel 2, insbesondere der die Bündel 2 beinhaltende Transportbehälter 1, in das Innere des Gehäuses 13 und/oder in den Bereich der unteren Öffnung des Gehäuses 13 befördert werden können.

Für den Fall, dass das Sichtfeld 11 der Bilderfassungseinrichtung 10 kleiner ist als die Länge oder Breite des Transportbehälters 1, ist die Bilderfassungseinrichtung 10 so angesteuert, dass diese eine Reihe von Bildern erfasst, während der Transportbehälter 1 mit den darin befindlichen Banknotenbündeln 2 an der Bilderfassungseinrichtung 10 mit Hilfe der Transporteinrichtung 15 vorbeitransportiert wird. Alternativ oder zusätzlich ist es aber auch möglich, die Bilderfassungseinrichtung 10 an einer geeigneten Transporteinrichtung (nicht dargestellt) anzubringen, welche die Bilderfassungseinrichtung 10 relativ zum Transportbehälter 1 bzw. den zu zählenden Banknotenbündeln 2 während der Bilderfassung bewegt.

Wie bereits im Zusammenhang mit Figur 1 erläutert wurde, sind die einzelnen Banknotenbündel im Transportbehälter 1 stehend gelagert, so dass das das jeweilige Banknotenbündel 2 zusammenfassende Bündelungselement 3 von der Oberseite des Transportbehälters 1 her sichtbar ist. Dementsprechend ist in den von der Bilderfassungseinrichtung 10 aufgenommenen Bildern neben den Banknoten des jeweiligen Bündels 2 auch das Bündelungselement 3 sichtbar.

Die bei der Bildaufnahme erhaltenen Bilddaten werden an eine Auswertungseinrichtung 20 weitergeleitet und dort, ggf. nach einer Vorverarbeitung, mittels Bildanalyse ausgewertet, wobei insbesondere die im Bild bzw. in den Bildern wiedergegebenen Bündelungselemente 3 identifiziert und gezählt werden. Die auf diese Weise ermittelte Anzahl der Bündelungselemente 3 entspricht dann der Anzahl der im Transportbehälter 1 befindlichen Banknotenbündel 2.

Vorzugsweise ist die Auswertungseinrichtung 20 dazu ausgestaltet, die auf diese Weise ermittelte Anzahl von Bündelungselementen 3 bzw. Banknotenbündel 2 mit einer vorgegebenen Anzahl N zu vergleichen. Vorzugsweise entspricht die vorgegebene Anzahl N der Anzahl der in einem Transportbehälter 1 jeweils kommissionierten Banknotenbündel 2. Die vorgegebene Anzahl N kann beispielsweise mit dem jeweiligen Transportbehälter 1 mitgeliefert werden, indem diese beispielsweise in einem am Transportbehälter 1 oder an dessen Abdeckung vorgesehenen oder mit diesem mitgelieferten Informationsträger gespeichert oder in kodierter Form oder als Klartext darauf geschrieben ist.

Vorzugsweise ist die Auswertungseinrichtung 20 so ausgestaltet, dass diese in Abhängigkeit vom Ergebnis dieses Vergleichs eine Ausgabeeinrichtung 22 zur Ausgabe einer entsprechenden Information ansteuert. Ergibt beispielsweise der Vergleich, dass die ermittelte Anzahl und die vorgegebene Anzahl N identisch sind, wird dies einer Bedienperson beispielsweise durch Aufleuchten einer grünen Lampe, Anzeige von "OK" oder "Anzahl Banknotenpäckchen korrekt" und/oder eine entsprechende akustische Ausgabe signalisiert. Für den Fall dagegen, dass die ermittelte Anzahl nicht mit der vorgegebenen Anzahl N übereinstimmt, wird die Bedienperson ebenfalls entsprechend informiert, beispielsweise durch Aufleuchten einer roten Lampe, durch Ausgabe von "STOPP" oder "Anzahl Banknotenpäckchen nicht korrekt" oder eine entsprechende akustische Benachrichtigung. Optional ist es auch möglich, an die Bedienperson gerichtete Anweisungen auszugeben, wie z.B. "Behälter entnehmen!" bzw. "Zählvorgang wiederholen!".

Die einzelnen Bündelungselemente 3 in den aufgenommenen Bildern werden vorzugsweise mit Hilfe von Methoden der Bildverarbeitung und des maschinellen Sehens ermittelt. Beispielsweise werden die Bündelungselemente 3 mit Hilfe einer Segmentierung ermittelt, bei welcher die im aufgenommenen Bild wiedergegebenen Abschnitte der Bündelungselemente 3 als jeweils inhaltlich zusammenhängende Region erkannt werden und somit von anderen Bildregionen, in denen beispielsweise nur die Schnittkanten der Banknotenbündel 2 wiedergegeben sind, unterschieden werden.

Bei der Segmentierung könne neben pixel-, kanten- oder regionenorientierten Verfahren auch Verfahren Verwendung finden, bei denen die Form und/oder Größe der jeweils zu erwartenden Bündelungselemente 3 und/oder deren Textur berücksichtigt wird. Eine Identifikation der Bündelungselemente 3 ist hierdurch auf besonders zuverlässige Weise möglich, da sich diese in der Regel sowohl durch ihre Form und Größe als auch durch ihre Textur, also ihre Oberflächenbeschaffenheit, deutlich von Bildbereichen unterscheiden, in denen die jeweiligen Schnittkanten der Banknoten eines Banknotenbündels 2 wiedergegeben sind.

Es ist vorgesehen, die zu zählenden Banknotenbündel 2 mit ultravioletter Strahlung zu bestrahlen. Dies ist besonders vorteilhaft, wenn die Bündelungselemente 3 Substanzen enthalten, die durch ultraviolette Strahlung zur Abgabe von Fluoreszenzstrahlung angeregt werden können. Werden als Bündelungselemente 3 beispielsweise Banderolen aus Papier verwendet, werden die im Papier üblicherweise enthaltenen optischen Aufheller durch die ultraviolette Strahlung zur Emission von Fluoreszenzlicht angeregt. In den aufgenommenen Bildern erscheinen dann die Bündelungselemente 3 wesentlich heller als die Schnittkanten des jeweiligen Banknotenbündels 2, so dass diese mit hoher Zuverlässigkeit unterschieden bzw. erkannt werden können.

Vorzugsweise enthält das von den Beleuchtungseinrichtungen 12 ausgesandte Strahlungsspektrum neben ultravioletter Strahlung keine spektralen Anteile oder zumindest vernachlässigbare spektrale Anteile im sichtbaren Spektrum. Hierdurch wird erreicht, dass beispielsweise im Falle von Banderolen aus Papier in den jeweils erfassten Bildern lediglich die Bündelungselemente 3 in Form von leuchtenden Quadraten oder Rechtecken zu erkennen sind, während die übrigen, nichtfluoreszierenden Bildbereiche im Wesentlichen dunkel sind. Die automatische Identifikation sowie das Zählen der im aufgenommenen Bild wiedergegebenen Bündelungselemente 3 wird hierdurch mit besonders hoher Zuverlässigkeit möglich.

Zusätzlich kann vorgesehen sein, dass die zu zählenden Banknotenbündel 2 einschließlich Bündelungselementen 3 mit Infrarotstrahlung bestrahlt werden, so dass gegebenenfalls vorhandene Sicherheitsmerkmale auf dem bzw. im jeweiligen Bündelungselement 3 sichtbar gemacht werden können. Auf diese Weise kann nicht nur die Anzahl der in einem Transportbehälter 1 befindlichen Banknotenbündel 2 zuverlässig festgestellt werden, sondern auch die Echtheit der die jeweiligen Banknotenbündel 2 zusammenfassenden Bündelungselemente 3 geprüft werden.

Vorzugsweise ist zusätzlich eine Speichereinrichtung 21 vorgesehen, in welcher die mittels Bilderfassungseinrichtung 10 von den jeweils zu zählenden Banknotenbündeln 2 erfassten Bilder, vorzugsweise zusammen mit einer Identifikationsnummer für den jeweiligen Transportbehälter und/oder der ermittelten Anzahl der darin befindlichen Banknotenbündel 2, gespeichert werden. Dadurch ist es möglich, nicht nur die Anzahl der im Transportbehälter 1 befindlichen Banknotenpäckchen 2 zu ermitteln und zu dokumentieren, sondern gleichzeitig das der Ermittlung der Anzahl zugrunde liegende Bild zu archivieren, um dieses in Bedarfsfall zu einem späteren Zeitpunkt zu Nachweiszwecken zur Verfügung stellen zu können.

Figur 3 zeigt einen Querschnitt eines zweiten Beispiels einer Vorrichtung zum Zählen von Banknotenbündeln in einer Seitenansicht. Wie bei dem in Figur 2 gezeigten Beispiel befindet sich auch in diesem Beispiel eine Vielzahl von Banknotenbündeln stehend in einem Transportbehälter 1, der in diesem Fall jedoch nicht gegen eine Beleuchtung durch Umgebungslicht abgeschirmt ist.

Beispielsweise kann der Transportbehälter 1 einfach auf einem Arbeitstisch (nicht dargestellt) abgestellt werden, über welchem eine Bilderfassungseinrichtung 10 angebracht ist.

Beispielsweise kann die Bilderfassungseinrichtung 10 an der jeweiligen Zimmerdecke montiert sein. Alternativ ist es aber auch möglich, über dem Arbeitstisch eine Halterung vorzusehen, beispielsweise einen Träger oder Ausleger, an welchem die Bilderfassungseinrichtung 10 angebracht ist.

Vorzugsweise ist der Abstand zwischen der Bilderfassungseinrichtung 10 und dem Transportbehälter 1 so gewählt, dass der Transportbehälter 1 und die darin befindlichen Banknotenbündel 2 innerhalb des Sichtfeldes 11 der Bilderfassungseinrichtung 10 liegen.

Es ist wenigstens eine Beleuchtungseinrichtung 12 vorgesehen, mittels derer die Banknotenbündel 2 mit Licht im ultravioletten Spektralbereich bestrahlt werden.

Im Übrigen gelten für das in Figur 3 gezeigte zweite Beispiel die Ausführungen im Zusammenhang mit dem in Figur 2 gezeigten ersten Beispiel der Vorrichtung entsprechend.

## Patentansprüche

1. Vorrichtung zum Zählen von Wertdokumentbündeln (2), welche jeweils mehrere durch ein Bündelungselement (3) zu einem Bündel zusammengefasste Wertdokumente, insbesondere Banknoten, enthalten,
- eine Bilderfassungseinrichtung (10), welche dazu ausgebildet ist, mindestens ein Bild der Wertdokumentbündel (2) einschließlich Bündelungselementen (3) zu erfassen, und
- eine Auswertungseinrichtung (20), welche dazu ausgebildet ist, im erfassten Bild die Bündelungselemente (3) zu identifizieren und deren Anzahl zu ermitteln
**gekennzeichnet durch**
mindestens einer Beleuchtungseinrichtung (12), welche zur Beleuchtung der Wertdokumentbündel (2) einschließlich Bündelungselementen (3) mit ultravioletter Strahlung ausgebildet ist, wobei
die Auswertungseinrichtung (20) dazu ausgebildet ist, die Bündelungselemente (3) anhand eines Fluoreszenzverhaltens der Bündelungselemente (3) zu identifizieren.

2. Vorrichtung nach Anspruch 1, wobei die Auswertungseinrichtung (20) dazu ausgebildet ist, Bündelungselemente (3) in Form von Papierstreifen, insbesondere Banderolen, durch welche die Wertdokumente des jeweiligen Wertdokumentbündels (2) zusammengehalten werden, zu identifizieren.

3. Vorrichtung nach einem der vorangehenden Ansprüche mit einer Ausgabeeinrichtung (22) zur Ausgabe von Informationen, wobei die Auswertungseinrichtung (20) dazu ausgebildet ist, die ermittelte Anzahl der Bündelungselemente (3) mit einer vorgegebenen Anzahl (N) zu vergleichen und die Ausgabeeinrichtung (22) zur Ausgabe einer Information in Abhängigkeit vom Ergebnis des Vergleichs anzusteuern.

4. Vorrichtung nach einem der vorangehenden Ansprüche mit einer Speichereinrichtung (21), welche dazu ausgebildet ist, das von den Wertdokumentbündeln (2) einschließlich Bündelungselementen (3) erfasste Bild, insbesondere zum Zwecke der Archivierung, zu speichern.

5. Vorrichtung nach einem der vorangehenden Ansprüche mit einem Gehäuse (13), in dessen Innerem die Bilderfassungseinrichtung (10) und/oder die Beleuchtungseinrichtung (12) angeordnet ist bzw. sind, wobei das Gehäuse (13) mindestens eine Öffnung aufweist, durch die ein Wertdokumentbehälter (1), in welchem sich die zu zählenden Wertdokumentbündel (2) befinden, in das Innere des Gehäuses (13) gebracht werden kann.

6. Vorrichtung nach Anspruch 5, wobei die Größe und/oder Form des Gehäuses (13) an die Größe bzw. Form unterschiedlicher Wertdokumentbehälter (1) anpassbar ist.

7. Vorrichtung nach einem der Ansprüche 1 bis 4, wobei die Bilderfassungseinrichtung (10) und/oder die Beleuchtungseinrichtung (12) an einer Zimmerdecke, insbesondere über einem Arbeitstisch, angebracht ist bzw. sind.

8. Vorrichtung nach einem der vorangehenden Ansprüche mit einer Transporteinrichtung (15), welche dazu ausgebildet ist, die Bilderfassungseinrichtung (10) und die Wertdokumentbündel (2), welche sich insbesondere in einem Wertdokumentbehälter (1) befinden, während der Bilderfassung relativ zueinander zu bewegen.

9. Vorrichtung nach einem der vorangehenden Ansprüche mit einer Kommunikationseinrichtung, welche dazu ausgebildet ist, die ermittelte Anzahl der Bündelungselemente (3) in ein an einem Wertdokumentbehälter (1), in welchem sich die zu zählenden Wertdokumentbündel (2) befinden, vorgesehenes Speicherelement zu schreiben.

10. Verfahren zum Zählen von Wertdokumentbündeln (2), welche jeweils mehrere durch ein Bündelungselement (3) zu einem Bündel zusammengefasste Wertdokumente, insbesondere Banknoten, enthalten, mittels einer Vorrichtung nach einem der vorangehenden Ansprüche mit folgenden Schritten:
- Beleuchten der Wertdokumentbündel (2) einschließlich Bündelungselementen (3) mit ultravioletter Strahlung,
- Erfassen mindestens eines Bildes der Wertdokumentbündel (2) einschließlich Bündelungselementen (3),
- Identifizieren der Bündelungselemente (3) im erfassten Bild anhand eines Fluoreszenzverhaltens der Bündelungselemente (3) und
- Ermitteln der Anzahl der Bündelungselemente (3) anhand der im Bild identifizierten Bündelungselemente (3).

## Claims

1. An apparatus for counting value-document bundles (2), which contain respectively several value documents, in particular bank notes, combined to a bundle by a bundling element (3),
- an image-capturing device (10) which is configured to capture at least one image of the value-document bundles (2) including bundling elements (3), and
- an evaluation device (20) which is configured to identify the bundling elements (3) in the captured image and to establish their number
**characterized by**
at least one illumination device (12) which is configured for illuminating the value-document bundles (2) including bundling elements (3) with ultraviolet radiation, wherein
the evaluation device (20) is configured to identify the bundling elements (3) on the basis of a fluorescence behavior of the bundling elements (3).

2. The apparatus according to claim 1, wherein the evaluation device (20) is configured to identify bundling elements (3) in the form of paper strips, in particular bands, by which the value documents of the respective value-document bundle (2) are held together.

3. The apparatus according to any of the preceding claims having an output device (22) for outputting information items, wherein the evaluation device (20) is configured to compare the established number of the bundling elements (3) with a pre-specified number (N) and to actuate the output device (22) for outputting an information item in dependence on the result of the comparison.

4. The apparatus according to any of the preceding claims having a storage device (21) which is configured to store the captured image of the value-document bundles (2) including bundling elements (3), in particular for the purpose of archiving.

5. The apparatus according to any of the preceding claims, having a housing (13) in whose interior the image-capturing device (10) and/or the illumination device (12) is or are arranged, wherein the housing (13) has at least one opening by which a value-document container (1), in which the value-document bundles (2) to be counted are located, can be brought into the interior of the housing (13).

6. The apparatus according to claim 5, wherein the size and/or form of the housing (13) is adaptable to the size or form of different value-document containers (1).

7. The apparatus according to any of claims 1 to 4, wherein the image-capturing device (10) and/or the illumination device (12) is or are attached at a room ceiling, in particular over a work table.

8. The apparatus according to any of the preceding claims, having a transport device (15) which is configured to move the image-capturing device (10) and the value-document bundles (2), which are located in particular in a value-document container (1), relative to each other during the image capture.

9. The apparatus according to any of the preceding claims, having a communication device which is configured to write the established number of the bundling elements (3) to a storage element provided in a value-document container (1) in which the value-document bundles (2) to be counted are located.

10. A method for counting value-document bundles (2), which contain respectively several value documents, in particular bank notes, combined to a bundle by a bundling element (3), by means of an apparatus according to one of the preceding claims with the following steps:
- illuminating the value-document bundles (2) including bundling elements (3) with ultraviolet radiation,
- capturing at least one image of the value-document bundles (2) including bundling elements (3),
- identifying the bundling elements (3) in the captured image on the basis of a fluorescence behavior of the bundling elements (3) and
- establishing the number of the bundling elements (3) on the basis of the bundling elements (3) identified in the image.

## Revendications

1. Dispositif de comptage de liasses de documents de valeur (2) qui contiennent respectivement plusieurs documents de valeur, en particulier billets de banque, retenus pas un élément d'enliassage (3) de manière à former une liasse,
- un équipement de saisie d'image (10) conçu pour saisir au moins une image des liasses de documents de valeur (2) y compris des éléments d'enliassage (3), et
- un équipement d'évaluation (20) conçu pour identifier dans l'image saisie les éléments d'enliassage (3) et pour déterminer leur nombre,
**caractérisé par**
au moins un équipement d'éclairage (12) conçu pour l'éclairage des liasses de documents de valeur (2) y compris des éléments d'enliassage (3) avec du rayonnement ultraviolet, cependant que l'équipement d'évaluation (20) est conçu pour identifier les éléments d'enliassage (3) à l'aide d'un comportement de fluorescence des éléments d'enliassage (3).

2. Dispositif selon la revendication 1, cependant que l'équipement d'évaluation (20) est conçu pour identifier des éléments d'enliassage (3) sous forme de rubans de papier, en particulier de banderoles, par lesquels les documents de valeur de la liasse respective de documents de valeur (2) sont retenus.

3. Dispositif selon une des revendications précédentes, ayant un équipement de délivrance (22) pour la délivrance d'informations, cependant que l'équipement d'évaluation (20) est conçu pour comparer le nombre déterminé des éléments d'enliassage (3) avec un nombre prédéterminé (N) et pour commander l'équipement de délivrance (22) pour la délivrance d'une information en fonction du résultat de la comparaison.

4. Dispositif selon une des revendications précédentes, ayant un équipement de mémorisation (21) conçu pour mémoriser l'image saisie des liasses de documents de valeur (2) y compris des éléments d'enliassage (3), en particulier aux fins de l'archivage.

5. Dispositif selon une des revendications précédentes, ayant un boîtier (13) dans l'intérieur duquel l'équipement de saisie d'image (10) et/ou l'équipement d'éclairage (12) est ou sont agencé(s), cependant que le boîtier (13) comporte au moins une ouverture à travers laquelle un contenant de documents de valeur (1) dans lequel se trouvent les liasses de documents de valeur (2) à compter peut être introduit dans l'intérieur du boîtier (13).

6. Dispositif selon la revendication 5, cependant que la taille et/ou la forme du boîtier (13) est adaptable à la taille ou à la forme de différents contenant de documents de valeur (1).

7. Dispositif selon une des revendications de 1 à 4, cependant que l'équipement de saisie d'image (10) et/ou l'équipement d'éclairage (12) est ou sont placé(s) à un plafond, en particulier au-dessus d'une table de travail.

8. Dispositif selon une des revendications précédentes, ayant un équipement de transport (15) conçu pour déplacer relativement l'un à l'autre pendant la saisie d'image l'équipement de saisie d'image (10) et les liasses de documents de valeur (2) se trouvant en particulier dans un contenant de documents de valeur (1).

9. Dispositif selon une des revendications précédentes, ayant un équipement de communication conçu pour écrire dans un élément de mémoire, prévu à un contenant de documents de valeur (1) dans lequel se trouvent les liasses de documents de valeur (2) à compter, le nombre déterminé des éléments d'enliassage (3).

10. Procédé de comptage de liasses de documents de valeur (2) qui contiennent respectivement plusieurs documents de valeur, en particulier billets de banque, retenus pas un élément d'enliassage (3) de manière à former une liasse, au moyen d'un dispositif selon une des revendications précédentes, comprenant les étapes suivantes :
- éclairage des liasses de documents de valeur (2) y compris des éléments d'enliassage (3) avec du rayonnement ultraviolet,
- saisie d'au moins une image des liasses de documents de valeur (2) y compris des éléments d'enliassage (3),
- identification des éléments d'enliassage (3) dans l'image saisie, à l'aide d'un comportement de fluorescence des éléments d'enliassage (3), et
- détermination du nombre des éléments d'enliassage (3) à l'aide des éléments d'enliassage (3) identifiés dans l'image.
